# EUROPÄISCHE PATENTSCHRIFT

(11) **EP 1 788 915 B1**
(45) Veröffentlichungstag und Bekanntmachung des Hinweises auf die Patenterteilung: **28.04.2010**
(21) Anmeldenummer: 06724831.0
(22) Anmeldetag: 03.02.2006
(51) Int. Cl.: A47J 27/21

(54) **BEHÄLTER**
CONTAINER
RECIPIENT

(30) Priorität: 11.02.2005 DE 102005006386
(43) Veröffentlichungstag der Anmeldung: 30.05.2007
(73) Patentinhaber: BSH Bosch und Siemens Hausgeräte GmbH, 81739 München (DE)
(72) Erfinder: HUBER, Michael, A-6341 Ebbs (AT); MATHES, Anton, 83364 Neukirchen (DE)
(86) Internationale Anmeldenummer: PCT/EP2006/050635
(87) Internationale Veröffentlichungsnummer: WO 2006/084819

(56) Entgegenhaltungen:
- EP-A1- 1 161 911
- DE-A1- 19 517 623
- DE-U1-202004 007 370

## Beschreibung

Die vorliegende Erfindung betrifft einen Behälter eines Haushaltsgerätes mit einem Deckel, insbesondere einen Wasserkocher mit Deckel, und mit einer Führungseinrichtung zur Führung des Deckels, welcher mittels der Führungseinrichtung zwischen einer Schließ- und einer Offenstellung verschwenkbar ist.

Ein Wasserkocher mit schwenkbarem Deckel ist aus der DE 91 06 749 U1 bekannt. Der Deckel ist am Wasserkocher auf einer Drehachse drehbar gelagert. Für die Montage und Demontage, beispielsweise im Reparaturfall, muss regelmäßig ein großer Teil des Wasserkochers zerlegt werden. Das erfordert einen hohen Aufwand und kann bei komplexen Geräten zusätzliche Fehlerquellen bei der Montage schaffen.

Aufgabe der vorliegenden Erfindung ist es deshalb, einen Behälter anzugeben, bei dem die Montage und Demontage eines Deckels vereinfacht ist, um eine schnelle und zuverlässigere Montage bzw. Demontage des Deckels zum Beispiel im Reparatur- bzw. Austauschfall zu ermöglichen.

Diese Aufgabe wird gelöst durch einen Behälter eines Haushaltsgerätes der oben genannten Art, wobei die Führungseinrichtung wenigstens eine gestreckte kreisbogenförmig gekrümmte Führungsbahn mit insbesondere einem großen Kreisbogenradius aufweist, welche mit wenigstens einer korrespondierenden Führungsbahn des Deckels in Wirkverbindung steht. Der Deckel kann zwischen zwei Endpositionen, nämlich einer Offen- und einer Schließstellung verschwenkt werden. In der Offenstellung hat der Deckel eine im Wesentlichen vertikale und in der Schließstellung eine im Wesentlichen horizontale Position. Die Offenstellung dient zur Befüllung und Leerung sowie zur Reinigung des Behälters durch eine vom Deckel freigegebene Öffnung hindurch. In der Schließstellung verschließt der Deckel die Öffnung und bewirkt einen nahezu dampfdichten Verschluss. Das ist bei Wasserkochern von Bedeutung, um das Wasser möglichst schnell zum Kochen zu bringen. Er kann auch einen Auslaufschutz, beispielsweise beim Umstoßen des Behälters gewährleisten. Zusätzlich können auch Zwischenstellungen vorgesehen sein, in denen der Deckel arretierbar ist.

Bei der Führungseinrichtung kann es sich um ein am Behälter angeordnetes Bauteil handeln, welches zwei Führungsbahnen aufweist. Um bei montiertem Deckel eine Verschwenkbewegung des Deckels zwischen der Schließ- und Offenstellung zu ermöglichen, sind am Deckel ebenfalls Führungsbahnen angeordnet, welche mit denen an der Führungseinrichtung zusammenwirken. Sie stellen Flächen dar, auf denen sie relativ zueinander gleiten. Die Führungsbahnen der Führungseinrichtung und des Deckels sind kreisbogenförmig gekrümmt, um eine Verschwenkbewegung des Deckels zu ermöglichen. Erfindungsgemäß weisen sie einen gestreckten großen Kreisbogenradius von etwa zwischen 1 und 2 cm auf. Er ist jedenfalls deutlich größer als bei herkömmlichen Achsen, so dass die Länge der Führungsbahn um ein Vielfaches länger ist als die Führungsbahn bei einer herkömmlichen axialen Lagerung eines Deckels.

Bei axialer Lagerung des Deckels bilden zum einen die Drehachse mit ihrer Mantelfläche und zum anderen der die Drehachse umschließende Teil des Deckels die Führungsflächen. Sie sind aufgrund des im Allgemeinen kleinen Radius der Achse sehr klein. Sie müssen jedoch alle Kräfte aufnehmen, die beim Verschwenken des Deckels auftreten können. Dies sind neben der Gewichtskraft des Deckels auch Kräfte, die ein Benutzer beim Öffnen und Schließen auf den Deckel ausübt. Insbesondere in einer geöffneten Stellung des Deckels, bei welcher der Deckel einen großen Hebelarm darstellt, kann es infolge unsachgemäßer Bedienung durch Verkanten oder Kollision mit anderen Gegenständen zu einer hohen Krafteinwirkung im Bereich der Führungsflächen kommen. Die Führungsflächen können dann einer hohen Flächenbelastung unterliegen, was zu erhöhtem Verschleiß und folglich zu einer geringeren Standzeit der betroffenen Bauteile führt. Aufgrund dessen müssen bei diesen Führungsflächen hochwertige Materialien, wie beispielsweise in der Form einer Metallachse, eingesetzt werden.

Die erfindungsgemäß gestreckten Führungsbahnen dagegen haben im Vergleich zu axialen Lagerungen eine relativ große Bogenlänge und einen relativ großen Kreisbogenradius. Sie weisen folglich auch eine relativ große Führungsfläche auf. Aufgrund der großen Führungsflächen ist die Flächenbelastung geringer. Die Führungsbahnen können daher auch aus weniger belastbaren und kostengünstigeren Materialien hergestellt werden, beispielsweise aus einem Kunststoff, aus dem auch weitere Komponenten des Wasserkochers gefertigt sind. Kunststoff lässt sich beispielsweise im Spritzgießverfahren auch leicht zu komplexen Bauteilen verarbeiten. Daher können die Führungsbahnen zusammen mit dem Deckel als einzelnes Bauteil in einem Arbeitsschritt hergestellt werden. Auf dieselbe Weise können die Führungsbahnen samt der Führungseinrichtung als integraler Bestandteil beispielsweise des Behältergriffes in einem Arbeitsschritt hergestellt werden. Aufgrund der dann geringen Anzahl einzelner Bauteile lässt sich der Herstellungs- und Montageaufwand des Haushaltsgeräts erheblich reduzieren. Auf hochfeste Materialen, wie zum Beispiel Metall für die Drehachse bei axialen Lagerungen, kann zudem gänzlich verzichtet werden.

Auch bei einer herkömmlichen Lagerung, deren Führungsbahnen prinzipiell eine Verschwenkung des Deckels um 360 Grad zulassen, ist die Verschwenkbewegung des Deckels zwischen Schließ- und Offenstellung gerätetechnisch auf einen Winkel von maximal etwa 100 Grad beschränkt. Erfindungsgemäß kann demnach die Führungsbahn des Deckels relativ zur Führungsbahn der Führungseinrichtung in einem Kreisbogenwinkel von bis zu 90 Grad bewegt werden. Als ausreichend hat sich eine Verschwenkung des Deckels innerhalb eines Kreisbogenwinkels von etwa 70 Grad herausgestellt. Die Länge der erfindungsgemäßen Führungsbahnen kann also auf die tatsächlich erforderliche Bogenlänge reduziert werden, so dass die Führungseinrichtung trotz großer Kreisbogenradien der Führungsbahnen nur einen geringen Einbauraum beansprucht. Dadurch kann neben dem erforderlichen Bauraum auch der Materialaufwand eingespart werden.

Die Führungsbahnen der Führungseinrichtung und des Deckels können dabei grundsätzlich durch jede geeignete Konstruktion miteinander verbunden sein, die eine zwangsgeführte Schwenkbewegung des Deckels zwischen der Schließ- und der Offenstellung ermöglicht. Die Schwenkbewegung resultiert aus einem Gegeneinanderverschieben von kreisbogenförmig gekrümmten und seitlich geführten Führungsbahnen entlang einer Kreislinie. Die Kreislinie liegt dabei in einer Ebene, die im Wesentlichen senkrecht zur Deckelfläche angeordnet ist. Sie entspricht dabei der Kontur der Führungsflächen der Führungsbahnen. Die Führungsbahnen von Deckel und Führungseinrichtung können dafür beispielsweise teleskopartig zusammenwirken. Unter "teleskopartig" soll dabei eine Führungseinrichtung mit zwei oder mehr ineinander verschiebbaren, beispielsweise rohrförmigen Querschnitten verstanden werden. Alternativ können die kreisbogenförmigen Führungsbahnen an im Wesentlichen flachen Profilen angeordnet sein, die direkt aufeinander liegen und nur in Richtung der Schwenkbewegung des Deckels gegeneinander verschiebbar sind. Dazu können sich die Profile gegenseitig umgreifen.

Diese Ausgestaltung der Führungseinrichtung und des Deckels ermöglicht bei entsprechender Konstruktion der Querschnitte bzw. Profile eine erhebliche Montagevereinfachung. Der Deckel kann nämlich durch einfaches Einschieben seiner Führungsbahn in die der Führungseinrichtung am Wasserkocher montiert werden. Bereits nach Ineinanderschieben der Führungsbahnen von Führungseinrichtung und Deckel können sie folglich ihre bestimmungsgemäße Funktion übernehmen.

Die Bewegung des Deckels zwischen der Offen- und Schließstellung wird durch Anschläge begrenzt. In der Schließstellung liegt der Deckel herkömmlicherweise auf einer Öffnung des Wasserkochers auf und verschließt sie. In der Offenstellung kann der Deckel an einer beliebigen Stelle am Wasserkocher, zum Beispiel im oberen Bereich des Griffes, anschlagen. Im Gebrauch des Wasserkochers bleiben hier unansehnliche Beschädigungen und Verschleiß nicht aus. Um dies zu vermeiden, kann die Verschwenkbewegung des Deckels in Öffnungsrichtung mittels eines separaten Anschlags begrenzt werden.

Der Anschlag kann vorteilhafterweise an der Führungseinrichtung angeordnet sein. Denn die Führungseinrichtung ist weitgehend unsichtbar. Damit beeinträchtigen Verschleißerscheinungen des Abschlags nicht den optischen Eindruck des Wasserkochers. Der Anschlag kann zudem als Rastelement ausgebildet sein, das bei der Montage des Deckels von einem Gegenrastelement am Deckel überdrückbar ist. Zusammen mit dem Gegenrastelement kann er einen Anschlag beim Verschwenken des Deckels in Öffnungsrichtung bilden. Das Gegenrastelement rastet nach dem Überdrücken des Rastelements hinter diesem in der Führungseinrichtung ein. Da sowohl das Rastelement als auch das Gegenrastelement herstellungstechnisch jeweils als Bestandteil der Führungseinrichtung bzw. des Deckels ausgebildet werden können, sind keine zusätzlichen Bauteile für den Anschlag erforderlich. Somit können auch hier Herstellungs- und Montageaufwand reduziert und zusätzliche Teile eingespart werden.

Das Rastelement kann zum Beispiel in Form einer federelastischen Lippe an der Führungseinrichtung angeformt sein. Die federnde Eigenschaft der Lippe kann zum einen durch entsprechende Materialauswahl und/oder zum anderen durch deren Abmessungen bzw. Geometrie erreicht werden. Wichtig dabei ist, dass die Lippe derart elastisch verformbar ist, dass ein Überdrücken der Lippe durch das Gegenrastelement bei der Montage bzw. Demontage des Deckels nicht zu einer Beschädigung der Lippe führt. Die Lippe kann vorteilhaft so an der Führungseinrichtung angeordnet sein, dass sie in Schließrichtung leichter überdrückbar ist als in Öffnungsrichtung. Das kann durch ihre Konstruktion - wie beispielsweise mittels der Ausrichtung der Lippe relativ zur Führungsbahn - erreicht werden, indem sie radial zur Führungsbahn der Führungseinrichtung sowie in Schließrichtung des Deckels leicht geneigt angeordnet ist. Anstelle einer Lippe können auch mehrere Lippen oder Elemente mit gleichartiger Funktion vorgesehen sein.

Bei dem Gegenrastelement am Deckel, welches bei der Montage bzw. Demontage des Deckels das Rastelement der Führungseinrichtung überdrückt, kann es sich zum Beispiel ebenfalls um eine Lippe handeln, welche vorzugsweise im Wesentlichen radial zur Führungsbahn des Deckels angeordnet ist.

Als Anschlag des Deckels in der Offenstellung kann es zu hohen Beanspruchungen des Rastelements kommen. Deshalb kann die Führungseinrichtung bei einer weiteren vorteilhaften Ausgestaltung zusätzlich zum Rastelement einen Stützvorsprung aufweisen, der eine Bewegung des Rastelements nach einer gewissen Auslenkung in der Öffnungsrichtung des Deckels begrenzt. Dazu kann er mit einem gewissen Abstand zum Rastelement angeordnet sein. Bei Belastung lenkt sich das federnde Rastelement in Belastungsrichtung aus, bis der Abstand überbrückt ist und sich das Rastelement an dem Stützvorsprung anlehnt. Er nimmt somit die hohen Beanspruchungen des Rastelements auf und schützt das Rastelement vor Überbeanspruchung bzw. Abbrechen. Der Stützvorsprung kann zum Beispiel keil- bzw. rampenförmig ausgebildet sein. Bei der Montage des Deckels gleitet das Gegenrastelement des Deckels auf dem rampenförmigen Vorsprung über das Rastelement hinweg und rastet dahinter in der Führungseinrichtung ein. In der Gegenrichtung dagegen schlägt das Gegenrastelement des Deckels am Rastelement an und verhindert seine weitere Bewegung. Zur Demontage des Deckels kann das Rastelement mit einem Werkzeug zurückgedrückt und der Deckel entfernt bzw. ausgetauscht werden. Alternativ kann auch die gesamte Führungseinrichtung federelastisch sein. Bei Demontage des Deckels kann dann die Führungseinrichtung samt Rastelement und Stützvorsprung zurückgedrückt werden, um das Gegenrastelement des Deckels freizugeben.

Die Bedienung des Deckels kann vorzugsweise in der Öffnungsrichtung erleichtert sein, indem eine in Öffnungsrichtung auf den Deckel wirkende Feder vorgesehen ist. Die Feder kann sich zwischen Deckel und Behälter einspreizen, um die Verschwenkbewegung des Deckels zwischen der Schließstellung und der Offenstellung zu unterstützen. Bei der Feder kann es sich um eine Dreh- bzw. Schenkelfeder handeln. Sie kann bei der Montage am Behälter und/oder bei Montage des Deckels als Druckfeder vorgespannt werden.

Die Feder kann in vorteilhafter Weise bereits am Behälter so vormontiert und gegebenenfalls vorgespannt sein, dass sie bereits bei der Montage des Deckels ohne zusätzliche Handgriffe in Wirkverbindung mit dem Deckel tritt. Nach dem Einrasten des Gegenrastelements des Deckels in der Führungseinrichtung etwa kann ein Schenkel der Drehfeder an dem Gegenrastelement des Deckels zur Anlage kommen und ihn in die Offenstellung drücken.

Damit können in einem Arbeitsgang sowohl die Führungsbahnen zur Führung der Deckelbewegung, der Anschlag zur Begrenzung der Deckelbewegung in der Offenstellung und die Drehfeder zur Erleichterung der Deckelbedienung montiert und zugleich aktiviert werden. Dies erspart einen erheblichen Montageaufwand, ohne die Herstellung der Bestandteile des Wasserkochers wesentlich zu verteuern. Aufgrund der getrennten Montage des Deckels stört er bei der Montage des Behälters bzw. Wasserkochers nicht. Auch Funktions- bzw. Qualitätskontrollen wie beispielsweise die der Wasserkocherfunktion können behinderungsfrei durchgeführt werden, weil der Deckel erst anschließend und mit wenigen Handgriffen montiert wird.

Das Prinzip der Erfindung wird im Folgenden anhand von Figuren beispielhaft erläutert. Es zeigen:
- Figur 1: einen Teilschnitt eines Wasserkochers mit Deckel in Offenstellung;
- Figur 2: einen Teilschnitt eines Wasserkochers mit Deckel in Schließstellung;
- Figur 3: einen Teilschnitt eines Wasserkochers mit Deckel zu Beginn der Montage des Deckels;
- Figur 4: einen Teilschnitt eines Wasserkochers mit Deckel während der Montage des Deckels und
- Figur 5: einen Teilschnitt eines Wasserkochers im Bereich der Führungseinrichtung.

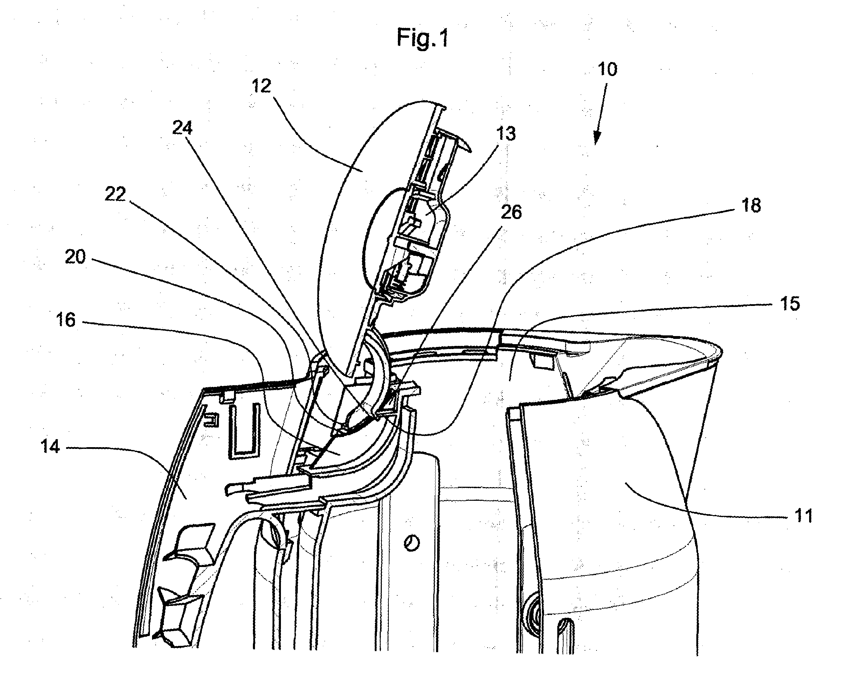

Figur 1 zeigt den oberen Bereich eines Wasserkochers 10 mit einem Behälter 11, einem Deckel 12 und einem Griff 14 in einer teilgeschnittenen perspektivischen Ansicht. Der Deckel 12 befindet sich in einer Offenstellung, in der er eine Öffnung 15 des Behälters 11 freigibt. An der Unterseite des Deckels 12 befindet sich eine Arretierungseinrichtung 13, mit der der Deckel 12 in der Schließstellung am Behälter 11 ver- bzw. entriegelt werden kann.

Im oberen Bereich des Wasserkochers 10 nahe dem Griff 14 ist eine Führungseinrichtung 16 angeordnet. Die Führungseinrichtung 16 weist zwei parallel zueinander angeordnete kreisbogenförmige Führungsbahnen 20 auf, wobei in Figur 1 aufgrund der Schnittdarstellung nur eine Führungsbahn 20 gezeigt ist. Die zweite Führungsbahn 20 ist bezogen auf die Schnittebene gespiegelt zur dargestellten Führungsbahn 20 angeordnet. Als integrales Teil weist die Führungseinrichtung 16 zwischen den beiden Führungsbahnen 20 eine Rastlippe 18 auf. Bezogen auf den Kreisbogen der Führungsbahnen 20 ragt ein freies Ende der Rastlippe 18 im Wesentlichen radial nach innen.

Oberhalb der Rastlippe 18 ist ein keil- bzw. rampenförmiger Stützvorsprung 26 an die Führungseinrichtung 16 angeformt. Das freie Ende des Stützvorsprungs 26 befindet sich dicht neben und nahezu auf gleicher Höhe mit dem freien Ende der Rastlippe 18.

An dem Deckel 12 sind zwei parallel zueinander angeordnete, ebenfalls kreisbogenförmige Führungsbahnen 22 angeformt, wobei in Figur 1 aufgrund der Schnittdarstellung wiederum nur eine Führungsbahn 22 von zweien gezeigt ist. Zwischen den Führungsbahnen 22 befindet sich ein Gegenrastelement 24. Das Gegenrastelement 24 ragt bezogen auf den Kreisbogen der Führungsbahn 22 radial nach außen.

Zu Beginn der Montage des Deckels 12 am Behälter 11 werden die Enden der Führungsbahnen 22 fluchtend zu den Führungsbahnen 20 der Führungseinrichtung 16 angeordnet, wobei die Führungsbahnen 22 bereits auf den Führungsbahnen 20 aufliegen. Wird der Deckel 12 dann weiter in Schließrichtung bzw. Montagerichtung verschwenkt, gleiten die Führungsbahnen 22 auf den Führungsbahnen 20 entlang, bis das Gegenrastelement 24 die Rastlippe 18 berührt. Aufgrund der leicht in Schließrichtung geneigten Anordnung der Rastlippe 18 lässt sie sich von dem Gegenrastelement 24 durch leichten Druck in Schließrichtung überdrücken. Dabei rastet das Gegenrastelement 24 in der Führungseinrichtung hinter der Rastlippe 18 ein. Diese Position ist in Figur 1 gezeigt. Sie entspricht gleichzeitig der Offenstellung des Deckels 12, in der die Rastlippe 18 für das Gegenrastelement 24 einen Anschlag bildet.

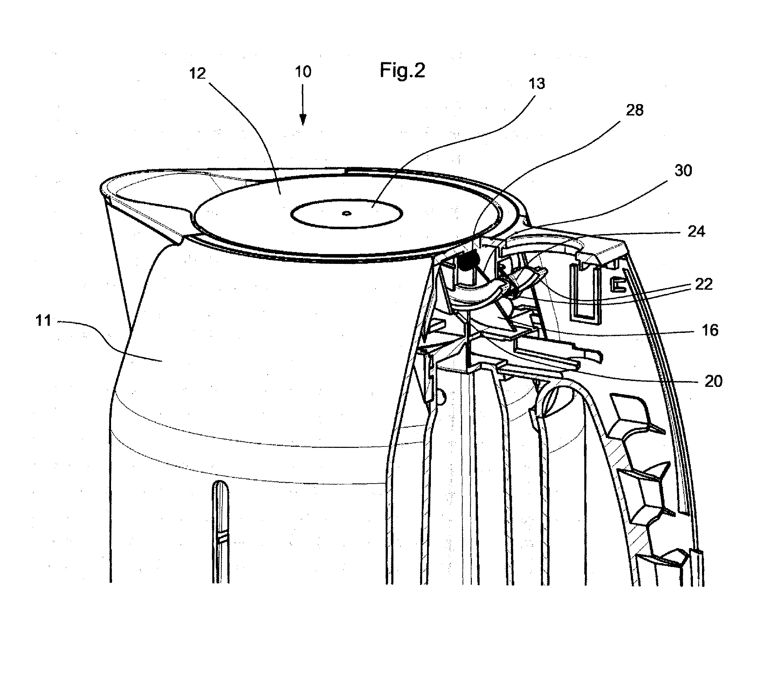

Figur 2 zeigt den Wasserkocher 10 mit Behälter 11 und Deckel 12 in der Schließstellung des Deckels 12 in einer teilgeschnittenen perspektivischen Ansicht. Der Deckel 12 ist in der Schließstellung durch die Arretierungseinrichtung 13 mit dem Behälter 11 verriegelt.

Am Behälter 10 ist eine Feder 28 nahe der Führungseinrichtung 16 angeordnet. Bei der Feder 28 handelt es sich um eine als Druckfeder vorgespannte Schenkelfeder, deren sichtbarer Schenkel 30 am Gegenrastelement 24 des Deckels 12 vorgespannt anliegt. Die Vorspannung der Feder 28 wird beim Schließen des Deckels 12 erzeugt. Da der Deckel 12 am Behälter 10 verriegelt ist, ist ein Aufschwenken des Deckels 12 in Öffnungsrichtung trotz wirkender Federkraft nicht möglich. Nach einer Entriegelung des Deckels 12 schwenkt die vorgespannte Feder 28 den Deckel 12 gegen dessen Eigengewicht bis in die Offenstellung.

In Figur 2 sind die beiden parallel zueinander angeordneten, kreisbogenförmig gekrümmten Führungsbahnen 22 des Deckels 12 ungeschnitten gezeigt, die jeweils auf einer Führungsbahn 20 der Führungseinrichtung 16 verschiebbar aufliegen. Die Kreisbogenform der Führungsbahnen 20 und 22 ermöglicht ein Verschwenken des Deckels 12 aus einer im Wesentlichen horizontalen Schließstellung in eine im Wesentlichen vertikale Offenstellung.

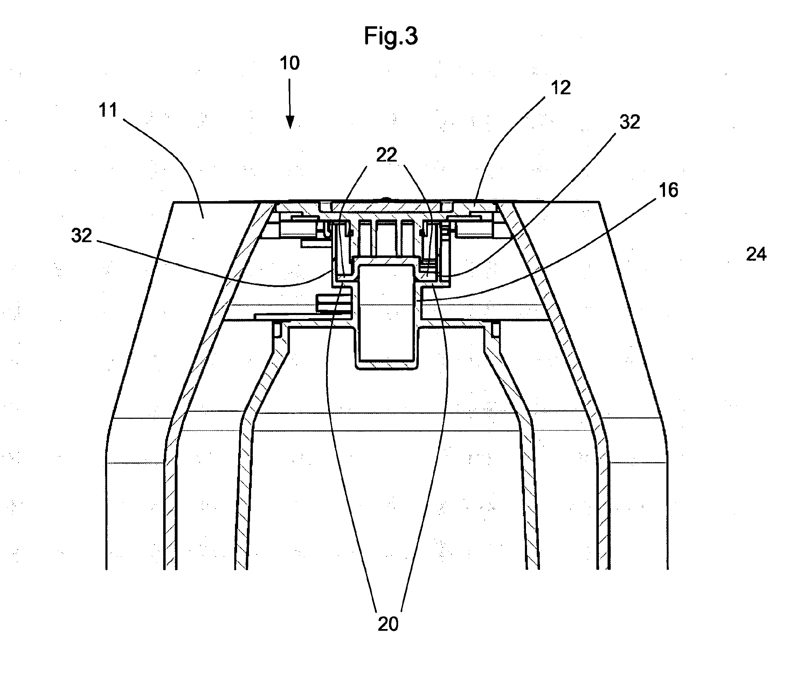

Figur 3 zeigt den Wasserkocher 10 mit Behälter 11 und Deckel 12 in einer weiteren Schnittdarstellung. In der dargestellten Position ist der Deckel 12 geschlossen und mit dem Wasserkocher 10 verriegelt. Die Führungseinrichtung 16 sowie die Führungsbahnen 20 und 22 sind quer zur Führungsrichtung geschnitten. Die Führungsbahnen 20 und 22 liegen flächig aufeinander und erhalten eine seitliche Führung von an der Führungseinrichtung 16 angeordneten Seitenwänden 32. Beim Verschwenken des Deckels 12 gleiten die Führungsbahnen 22 zwangsgeführt von den Seitenwänden 32 auf den Führungsbahnen 20 in einer Ebene senkrecht zur Schnittebene. Dabei bewegen sich die Führungsbahnen 22 auf den ortsfesten Führungsbahnen 20 in Schließrichtung des Deckels 12 auf den Betrachter zu und in Öffnungsrichtung vom Betrachter weg in die dargestellte Schnitt- oder Betrachtungsebene hinein.

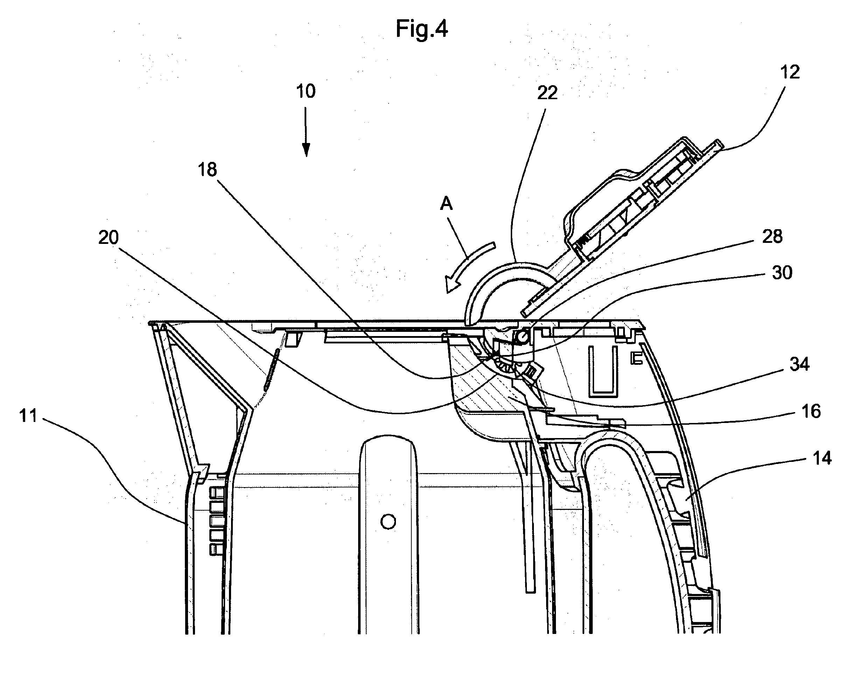

Figur 4 zeigt den oberen Bereich des Wasserkochers 10 mit dem Behälter 11, dem Deckel 12 und dem Griff 14 in einem Längsschnitt. Der Deckel 12 befindet sich in einer Ausgangsposition, wie sie zu Beginn einer Montage des Deckels 12 am Wasserkocher 10 typisch ist. Die Montagerichtung A entspricht der Verschwenkrichtung beim Schließen des Deckels 12.

Der Schenkel 30 der Feder 28 liegt in dieser Ausgangsposition am freien Ende der Rastlippe 18 an. Neben der Führungseinrichtung 16 ist ein Zahnrad 34 angeordnet. Es greift in eine an den Deckel 12 angeformte Zahnstange (in Figur 4 nicht dargestellt) ein. Die Zahnstange ist rückseitig an einer der Führungsbahnen 22 angeordnet und weist ebenfalls eine kreisbogenförmige Krümmung auf. Durch eine mit dem Zahnrad 34 in Wirkverbindung stehende Mechanik, zum Beispiel einen Silikonöldämpfer, kann die Schwenkgeschwindigkeit der Deckelbewegung kontrolliert gedämpft werden. Dies ist insbesondere beim Öffnen des Deckels 12 von Bedeutung, da der Deckel ohne Dämpfung nach dem Entriegeln durch die Federkraft ungebremst bis in die Offenstellung an der Rastlippe 18 anschlagen würde. Das könnte sowohl am Deckel 12 als auch an Teilen der Führungseinrichtung zu Beschädigungen führen.

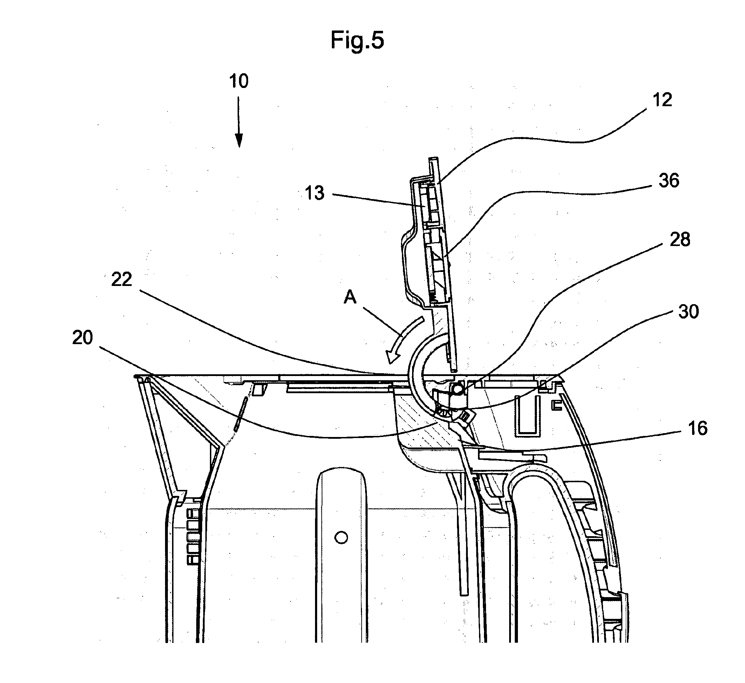

Figur 5 zeigt die Montage des Deckels 12 in der gleichen Schnittebene wie in Figur 4. Der Deckel 12 wird in Montagerichtung A weiter bewegt. Die Führungsbahnen 22 des Deckels 12 greifen dabei in die Führungsbahnen 20 der Führungseinrichtung 16 ein. Die Rastlippe 18 (in Figur 5 nicht dargestellt) ist in dieser Montageposition bereits von dem Gegenrastelement 24 (in Figur 5 ebenfalls nicht dargestellt) überdrückt. Der Schenkel 30 der Feder 28 liegt nun am in der Führungseinrichtung 16 eingerasteten Gegenrastelement 24 des Deckels 12 an. Durch ein weiteres Verschwenken des Deckels 12 in Schließrichtung bzw. Montagerichtung A wird die Feder 28 vorgespannt. Damit der Deckel 12 aus der Schließstellung heraus aufgrund der entgegen der Schließrichtung wirkenden Federkraft nicht sofort aufschwenkt, wird er in der Schließstellung mittels der Arretiereinrichtung 13 verriegelt. Die Entriegelung des Deckels 12 erfolgt mit einer Taste 36 im Zentrum des Deckels 12. Beim Entriegeln des Deckels 12 hat die Feder 28 die Funktion, den Deckel 12 bereits nach Betätigung der Taste 36 etwas anzulenken, so dass er nach Betätigung der Taste 36 nicht wieder verriegelt werden kann.

Es wird abschließend noch einmal darauf hingewiesen, dass es sich bei dem vorhergehenden, detailliert beschriebenen Wasserkocher 10 um ein Ausführungsbeispiel handelt, welches vom Fachmann in verschiedenster Weise modifiziert werden kann, ohne den Bereich der Erfindung zu verlassen. Insbesondere ist die Anwendung der Erfindung nicht auf Wasserkocher beschränkt.

Es wird der Vollständigkeit halber außerdem darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Behälter eines Haushaltsgerätes mit einem Deckel (12), insbesondere Wasserkocher (10) mit einem Deckel (12), und mit einer Führungseinrichtung (16) zur Führung des Deckels (12), welcher mittels der Führungseinrichtung (16) zwischen einer Schließ- und einer Offenstellung verschwenkbar ist, **dadurch gekennzeichnet, dass** die Führungseinrichtung (16) wenigstens eine gestreckte kreisbogenförmig gekrümmte Führungsbahn (20) aufweist, welche mit wenigstens einer korrespondierenden Führungsbahn (22) des Deckels (12) in Wirkverbindung steht.

2. Behälter nach Anspruch 1, **dadurch gekennzeichnet, dass** die wenigstens eine Führungsbahn (22) des Deckels (12) relativ zur wenigstens einen Führungsbahn (20) der Führungseinrichtung (16) in einem Kreisbogenwinkel von bis zu 90 Grad verschiebbar ist.

3. Behälter nach Anspruch 1 oder 2, **gekennzeichnet durch** ein Rastelement (18) an der Führungseinrichtung (16), welches bei Montage des Deckels (12) von einem Gegenrastelement (24) am Deckel (12) überdrückbar ist, um mit dem Gegenrastelement (24) einen Anschlag beim Verschwenken des Deckels (12) in Öffnungsrichtung zu erzeugen.

4. Behälter nach Anspruch 3, **dadurch gekennzeichnet, dass** das Rastelement (18) federelastisch ist.

5. Behälter nach einem der Ansprüche 1 bis 4, **gekennzeichnet durch** einen Stützvorsprung (26) an der Führungseinrichtung (16), welcher eine Bewegung des Rastelements (18) in Öffnungsrichtung des Deckels (12) begrenzt.

6. Behälter nach einem der Ansprüche 1 bis 5, **gekennzeichnet durch** eine auf den Deckel (12) in Öffnungsrichtung wirkende Feder (28).

7. Behälter (10) nach Anspruch 6, **dadurch gekennzeichnet, dass** die Feder (28) bei Montage des Deckels (12) vorgespannt ist.

## Claims

1. Container of a domestic appliance with a lid (12), particularly a kettle (10) with a lid (12), and with a guide device (16) for guiding the lid (12), which is movable by means of the guide device (16) between a closed setting and an open setting, **characterised in that** the guide device (16) comprises at least one elongated arcuately curved guide track (20) operatively connected with at least one corresponding guide track (22) of the lid (12).

2. Container according to claim 1, **characterised in that** the at least one guide track (22) of the lid (12) is displaceable relative to the at least one guide track (20) of the guide device (16) in an arc angle of up to 90 degrees.

3. Container according to claim 1 or 2, **characterised by** a detent element (18) at the guide device (16), which on mounting of the lid (12) can be urged over by a counter-detent element (24) at the lid (12) in order to produce together with the counter-detent element (24) an abutment on pivotation of the lid (12) in opening direction.

4. Container according to claim 3, **characterised in that** the detent element (18) is resilient.

5. Container according to any one of claims 1 to 4, **characterised by** a support projection (26) at the guide device (16), which limits movement of the detent element (18) in opening direction of the lid (12).

6. Container according to any one of claims 1 to 5, **characterised by** a spring (28) acting on the lid (12) in opening direction.

7. Container (10) according to claim 6, **characterised in that** the spring (28) is biased when the lid (12) is mounted.

## Revendications

1. Récipient d'un appareil ménager comprenant un couvercle (12), notamment bouilloire (10) comprenant un couvercle (12), et comprenant un dispositif de guidage (16) pour guider le couvercle (12), lequel est pivotant entre une position de fermeture et une position d'ouverture au moyen du dispositif de guidage (16), **caractérisé en ce que** le dispositif de guidage (16) présente au moins une glissière (20) allongée, courbée en forme d'arc de cercle, laquelle est en liaison active avec au moins une glissière correspondante (22) du couvercle (12).

2. Récipient selon la revendication 1, **caractérisé en ce que** l'au moins une glissière (22) du couvercle (12) est déplaçable de manière relative par rapport à l'au moins une glissière (20) du dispositif de guidage (16) dans un angle d'arc de cercle allant jusqu'à 90 degrés.

3. Récipient selon la revendication 1 ou 2, **caractérisé par** un élément d'enclenchement (18) sur le dispositif de guidage (16), lequel élément d'enclenchement peut être pressé sur le couvercle (12) par un contre-élément d'enclenchement (24) lors du montage du couvercle afin, avec le contre-élément d'enclenchement (24), de générer une butée lors du pivotement du couvercle (12) dans le sens d'ouverture.

4. Récipient selon la revendication 3, **caractérisé en ce que** l'élément d'enclenchement (18) est élastique.

5. Récipient selon l'une quelconque des revendications 1 à 4, **caractérisé par** une saillie de support (26) sur le dispositif de guidage (16), laquelle limite un mouvement de l'élément d'enclenchement (18) dans le sens d'ouverture du couvercle (12).

6. Récipient selon l'une quelconque des revendications 1 à 5, **caractérisé par** un ressort (28) agissant sur le couvercle (12) dans le sens d'ouverture.

7. Récipient (10) selon la revendication 6, **caractérisé en ce que** le ressort (28) est précontraint lors du montage du couvercle (12).
